# EUROPEAN PATENT APPLICATION

(11) **EP 4 843 389 A1**
(43) Date of publication of application: **25.11.2026**
(21) Application number: 25178215.7
(22) Date of filing: 22.05.2025
(51) Int. Cl.: A01N 43/713, A01N 43/90, A01N 59/00, A01P 1/00

(54) **A PHOTOACTIVE PRODUCT COMPRISING A FIBROUS SUBSTRATE COMPRISING A PHTHALOCYANINE AND A METHOD FOR PREPARING THEREOF**

(71) Applicant: Punda Global Oy, 00100 Helsinki (FI)
(72) Inventor: AHMED, Zafar, 33720 Tampere (FI)
(74) Representative: Berggren Oy

(57) **Abstract**

A method for preparing a photoactive product comprising a fibrous substrate, the method comprising; providing fibrous substrate, providing a phthalocyanine of Formula I, providing one or more substances facilitating formation of the photoactive product, and immobilising the phthalocyanine of Formula I to the fibrous substrate. A photoactive product comprising a fibrous substrate comprising a phthalocyanine of Formula I. A method for inactivating micro-organisms, comprising providing the photoactive product, and irradiating the phthalocyanine or the object with light to obtain reactive oxygen species to inactivate the micro-organisms by oxidative action. The present disclosure provides use of phthalocyanine of Formula I for preparing the photoactive product, preferably with the method.

## Description

### Field of the application

The present application relates to a method for preparing a photoactive product comprising a fibrous substrate. The present application also relates to a photoactive product comprising a fibrous substrate. The present application also relates to a method for inactivating micro-organisms.

### Background

Products comprising photoactive substances are used in a variety of applications, wherein the photoactive molecules can provide reactive species when activated by light. In many cases it is desired to provide reactive oxygen species, which can be used for example for inactivating micro-organisms through oxidative action. Photodynamic antimicrobial chemotherapy (PACT) is found to be effective against the spread of drug-resistant bacteria and biofilms. The photoactive molecule absorbs a quantum of light and goes into a state of a higher energy, in which it can react with a molecule of oxygen and relay the excess of energy to it. The reactive oxygen species (ROS) generated can be a singlet oxygen molecule ¹O₂, a radical species (OH, HO₂, Os, etc.), or both.

The photoactive molecules can be used in photoantimicrobial textiles (PATX), which may be used in clothing, wearables, medical products and the like. Two essential components of PATXs are the textile fabric itself and the photoactive molecule.

When combining PACT action with products comprising a fibrous substrate to produce PATXs, certain problems arise. Firstly, the antimicrobial action cannot be accumulated and spared for the future. The ROS are generated directly under light and their lifetime measures from microseconds to seconds, so the antimicrobial action is lost immediately after the light goes off. Further, the photoactive molecules and the textile fibres undergo self-oxidation and decomposition under light, thus the photostability of PATXs is an issue. Even further, the bonding of the photoactive molecule to the fabric might be challenging and requires specific considerations in terms of stability and the ease of the dyeing process. Especially the photoactive molecules shall be attached and provided in the product or surface thereof in such way that the activity of the photoactive molecule is maintained for the lifetime of the product, even under challenging conditions such as when exposed to water or other solvents and/or under mechanical stress of the substrate. Also the properties of the product shall be considered. For example the colour or other appearance of the product should be controlled, which is challenging in cases where the photoactive molecules are coloured.

There is a need to find methods for enabling incorporation of efficient photoactive molecules to products comprising fibrous material in such way that the properties of the product can be controlled, maintained and/or enhanced. There is also a need to obtain products, which can exhibit the desired properties for the lifetime of the product and even at challenging conditions.

### Summary

In the present disclosure products comprising a specific phthalocyanine and methods for preparing thereof were found, which can overcome drawbacks of prior art. The obtained products exhibit high photoactive or photocatalytic properties, and can be used in a variety of applications. The products maintain their photoactive properties for a prolonged time. The properties of the product as such as well as the photocatalytic properties can be controlled. The used phthalocyanine exhibits different properties compared to similar prior art molecules in respect of activity but also physical behaviour in the fibrous substrates.

The present disclosure provides a method for preparing a photoactive product comprising a fibrous substrate, the method comprising
- providing fibrous substrate,
- providing a phthalocyanine of Formula I: 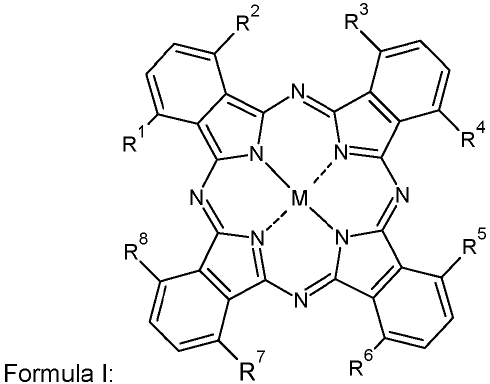
   wherein M is a metal ion or two hydrogen atoms,
   and wherein the substituent pairs R¹ and R², R³ and R⁴, R⁵ and R⁶, and R⁷ and R⁸, are
- a hydrogen, and
- the other substituent is the same in all the substituent pairs and is selected from 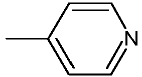 or 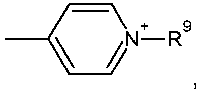 wherein R⁹ is a C1-C18 alkyl,
- providing one or more substances facilitating formation of the photoactive product,
- immobilising the phthalocyanine of Formula I to the fibrous substrate.

The present disclosure provides a photoactive product comprising a fibrous substrate, the product comprising a phthalocyanine of Formula I: 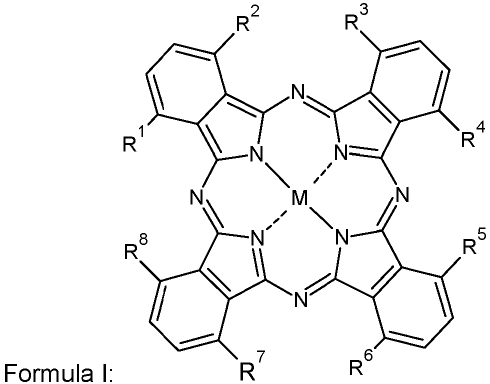
wherein M is a metal ion or two hydrogen atoms,
and wherein the substituent pairs R¹ and R², R³ and R⁴, R⁵ and R⁶, and R⁷ and R⁸, are
   - a hydrogen, and
   - the other substituent is the same in all the substituent pairs and is selected from 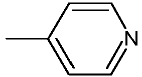 or 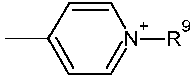
wherein R⁹ is a C1-C18 alkyl.

The present disclosure provides a method for inactivating micro-organisms, the method comprising
- providing the photoactive product, and
- irradiating the phthalocyanine or the object with light to obtain reactive oxygen species
- to inactivate the micro-organisms by oxidative action.

The present disclosure provides use of phthalocyanine of Formula I for preparing the photoactive product, preferably with the method.

The main embodiments are characterized in the independent claims. Various embodiments are disclosed in the dependent claims. The embodiments and examples disclosed herein are mutually freely combinable unless otherwise explicitly stated. The embodiments and examples not in the scope of the claims may be considered as embodiments and examples useful for understanding the invention.

The present phthalocyanines, when impregnated in fibrous substrate/support as such, exhibited better adsorption to the substrate/support when compared to prior art compounds, such as porphyrins. However, at conditions involving presence of moisture and/or organic solvents, or other substances that could affect the binding, especially over prolonged time and/or under mechanical stress, also the present phthalocyanines were found to leach or otherwise release from the substrate. To enhance the immobilisation of the present phthalocyanines to fibrous substrates, the present disclosure provides several solutions. It is possible to obtain products with enhances mechanical and chemical strength, barrier and/or antimicrobial properties.

Thus, it is possible to obtain products that can be used at conditions wherein leaching of the phthalocyanines is not desired, especially when there is an increased risk of leaching, i.e. to obtain products resistant and/or tolerant to external conditions, such as ambient conditions or even harsher conditions, such as washing or outdoor conditions or other conditions disclosed herein. The products may be industrial, consumer and/or hospital/medical products, and can be used for example to wound disinfection, sterilization, and/or prevention of microbial contamination.

One example of products relates to packing materials for products or conditions involving moisture, grease, solvents or other substances that could affect the binding of the phthalocyanines to packing materials and/or that could deteriorate the packing material, such as packing materials for food products, medical products and the like. Also in cases wherein the packing materials is exposed to external substances or other harmful conditions, such as mechanical stress and/or UV radiation, it is important to prevent leaching and/or degradation of the phthalocyanines.

Another example of products relates to medical products, such as dressings, wearable patches and the like, which during use are in contact with body fluids and/or other liquids, and which may be exposed also to mechanical stress, wherein it is desired that the phthalocyanines are not leached from the medical products. Thus it is possible to obtain durable and safe packing materials, medical products and other applicable products.

Another example of products relates to textiles, such as textiles used in clothing, wearables and the like, which are exposed to both body conditions, such as sweat and heat, but also to external conditions, such as high temperature, rain and UV radiation, especially with respect to outdoor clothing and the like. Clothes also need washing with detergents at elevated temperature, which provide very strict conditions, which tend to wash away poorly immobilised substances. As such products are generally used for years, it is important that the phthalocyanines are properly bound to the textile to maintain the photoactive properties for the whole lifespan of the textile. Thus, it is possible to obtain durable and safe clothing and other textile-based products.

In addition to binding of the phthalocyanines, also challenges related to controlling light permeance, protecting the phthalocyanines from photodegradation, controlling appearance of the product such as colour, and the like can be solved.

Further, the products comprising fibrous substrate must tolerate the whole production chain, which may include more than one operators and processing, handling and transporting of products. For example, one operator may produce the fibrous substrate, and the same or another operator treats the fibrous substrate with methods disclosed herein. After this the treated fibrous substrate may be further processed with one or more operators preparing final products or parts thereof, and then final products may be delivered for retail. Therefore, there are several risks during the whole process, which are not obvious in view of merely laboratory tests, and which can be solved by applying the present methods and combinations thereof.

### Brief description of the figures

Figure 1 shows a screening test with *E*. *coli* βBAV1C-T5-lux
Figure 2 shows a screening test with *Acinetobacter baylyi* ADP1 carrying plasmid pBAV1C-T5-lux
Figure 3 shows a comparison of microbial growth in CFU /ml for illuminated Pc4 filter paper against control samples
Figure 4 shows a phthalocyanine of Formula II
Figure 5 shows a phthalocyanine of Formula III
Figure 6 shows a phthalocyanine of Formula IV
Figure 7 shows a phthalocyanine of Formula V
Figure 8 shows the lamp profile and absorbance of the filter paper dyed with phthalocyanine Pc4 and porphyrin ZnPf
Figure 9 shows (a) absorbance spectra and (b) emission spectra of PBS extracts of papers dyed with ZnPf and Pc4. Excitation wavelength was 422 nm for ZnPf and 694 nm for Pc4.
Figure 10 shows absorptances (a%) of ZnPf dyed paper and Pc4 dyed paper against wavelength initially and after 64 hours.
Figure 11 shows the structures of Pc4 (Zn(II)TMPyPc) and the porphyrin ZnPf (Zn(II)TMPyP) used as a reference in tests.

### Detailed description

In this disclosure, percentage values, unless specifically indicated otherwise, are based on weight (w/w*,* by weight, or wt%). In specific examples, the features, embodiments and examples specified with the open term "comprise" may be further limited with a closed term "consisting of".

The present application discloses a phthalocyanine dye, which has four pyridyl substituents in its alpha-phthalo positions and methods for preparation thereof. The phthalocyanine may be present either as a free base or as a metal complex, such as a Zn complex, and the pyridyl substituent may be present either as a pyridine or as its N-alkylated derivative.

Phthalocyanines include isoindole-type bicyclic structure, i.e. aromatic heterocycle structure. Phthalocyaninenes, especially the present phthalocyanines, are thus different from other tetrapyrrole macrocyles, such as porphyrins or porphyrazines, and exhibit different properties, as has been confirmed experimentally. For example phthalocyanines are chemically and thermally more stable than porphyrins due to higher delocalization of aromaticity. Phthalocyanines are also generally less prone to the redox reactions as compared to porphyrins

The materials and methods disclosed herein may be used against microbes, especially pathogens. In general, the phthalocyanine of the embodiments provides efficacy against many types of pathogens simultaneously, including viruses, fungi and bacteria. It also provides efficacy against undetected and unculturable pathogens, against biofilms, moulds and multi-drug-resistant pathogens, and against Hospital Acquired Infections and "superbugs". The materials and methods also provide safe actions against the microbes, such as prevention of resistivity in bacteria and control of super bacteria, and reduced environment pollution.

The phthalocyanines are stable and durable, and they maintain their activity for a long time. The action provided by the materials and methods is simple. Merely exposure to light for 30-120 minutes, even for 30-60 minutes, or 30-45 minutes, is enough for disinfection. 30 minutes irradiation was found to provide efficient inactivation in most cases. No thermal or chemical treatment is needed, which is advantageous because in many places on Earth there is simply no possibility to boil water. The materials are suitable for large surfaces, such as cloths, carpets, seats, curtains and the like. The above-mentioned advantages have been confirmed in laboratories.

It was found out that even regular indoor light, such as consumer LED lamps, were useful to obtain the effect with the present materials. This is very beneficial as an inexpensive, economical and long-lasting light source, which is advantageous especially for broad use of photodynamic antimicrobial chemotherapy. Also sunlight, even during cloudy day, is efficient to provide the effect.

The present disclosure provides a phthalocyanine incorporated or included in a product comprising a fibrous substrate. The phthalocyanine may be incorporated or included by any suitable method, preferably by using one or more of the additional substances (aids) disclosed herein. The term "phthalocyanine" used herein refers to the phthalocyanines specified by any of the formulas disclosed in the following.

In general, the phthalocyanine having the four pyridyl substituents may be represented with the general formula I: 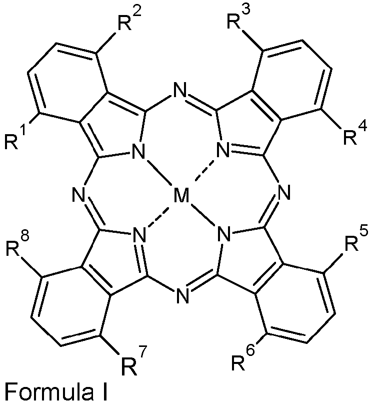
wherein the substituent pairs R¹ and R², R³ and R⁴, R⁵ and R⁶, and R⁷ and R⁸, independently of the other substituent pairs, are
   - a hydrogen, and
   - the other substituent is the same in all the substituent pairs and is selected from 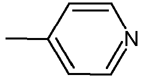 or 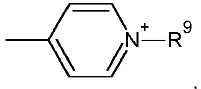
wherein R⁹ is a C1-C18 alkyl.

M may be a metal ion or two hydrogen atoms. M may be selected from Zn, Mg, Al, Cu, Co, Mn, Fe, Pt, Pd, Si, P, Sn, Ru, Ag, Au, Ir, Ni, Cd, Hg, U, Li, Na, K, Be, B, Ti, V, Cr, Ga, Ge, As, Y, Mo, Rh, In, Sb, Ba, W, Os, Re, Tl, Pb, and Bi. In one specific example the M is Zn.

There are four R substituents in the molecule, one per phthalo ring, with direct C-C bond between phthalocyanine and pyridine, at the positions marked R¹-R⁸. In one embodiment the substituent is pyridine. In one embodiment the substituent is N-alkylated pyridine.

R⁹ may be a C1-C18 alkyl, such as methyl, ethyl, propyl, butyl, pentyl, hexyl, heptyl, octyl, nonyl, decyl, undecyl or dodecyl. In one embodiment R⁹ is a C₁-C₁₂ alkyl. In one embodiment R⁹ is a C₁-C₁₀ alkyl. In one embodiment R⁹ is a C₁-C₈ alkyl. In one embodiment R⁹ is a C₁-C₆ alkyl. In one embodiment R⁹ is a C₂-C₁₂ alkyl. In one embodiment R⁹ is a C₂-C₁₀ alkyl. In one embodiment R⁹ is a C₂-C₈ alkyl. In one embodiment R⁹ is a C₂-C₆ alkyl. In one embodiment R⁹ is a C₃-C₁₂ alkyl. In one embodiment R⁹ is a C₃-C₁₀ alkyl. In one embodiment R⁹ is a C₃-C₈ alkyl. In one embodiment R⁹ is a C₃-C₆ alkyl. In one embodiment R⁹ is a C₄-C₁₂ alkyl. In one embodiment R⁹ is a C₄-C₁₀ alkyl. In one embodiment R⁹ is a C₄-C₈ alkyl. In one embodiment R⁹ is a C₄-C₆ alkyl.

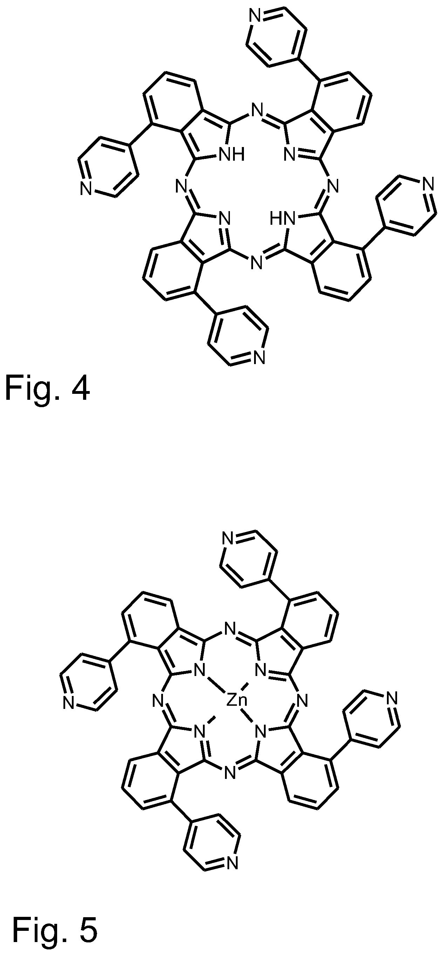

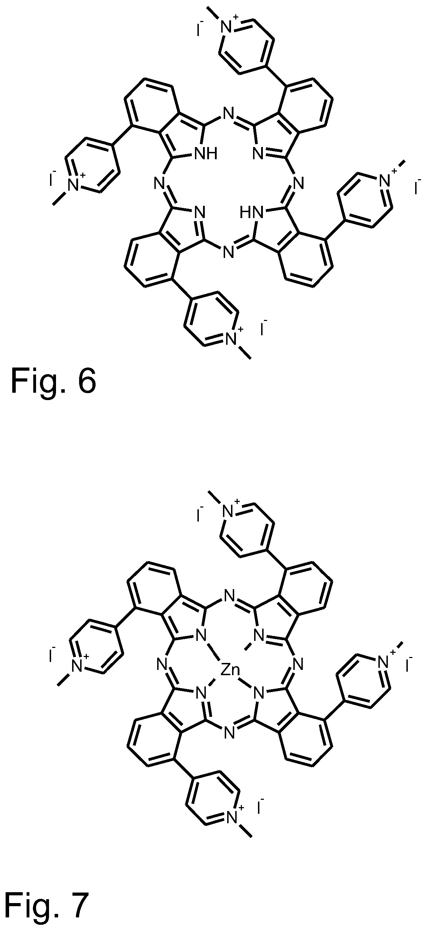

The "substituent pairs" recited herein refers to the two possible pyridyl substituents per one phthalo ring, wherein only one of the two is present. The substituents R¹-R⁸ in the Formula I may be a pyridine or its N-alkylated derivative, however in such way that only one of the substituents of substituent pair R¹ and R², substituent pair R³ and R⁴, substituent pair R⁵ and R⁶, and substituent pair R⁷ and R⁸, is a pyridine or its alkylated derivative, and the other one is a hydrogen, i.e. not actually a substituent. The preparation method of the phthalocyanine of the embodiments yields a mixture of isomers wherein the pyridyl substituent may be on either isomeric position of the phthalo ring at the each four positions in the molecule of Formula I, and the pyridyl substituent is the same in all the substituent pairs. Representative examples of these molecules are shown in the following and in the Figures 4-7, wherein the substituents are presented at the same isomeric position of each of the four phthalo rings (for example corresponding to R¹, R³, R⁵ and R⁷).

In one embodiment the phthalocyanine is a tetrakis[α-pyridyl] phthalocyanine of Formula II (Pc1):

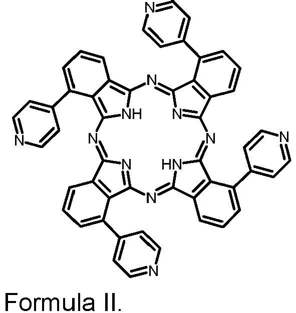

The systematic name of this molecule is 1(4),8(11),15(18),22(25)-tetra(pyridin-4-yl)-29H,31H-phthalocyanine. The numbers in parenthesis represent the alternative positions of the substituents.

In one embodiment the phthalocyanine is a tetrakis[α-pyridyl] zinc phthalocyanine of Formula III (Pc2):

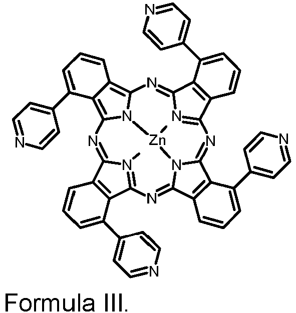

The systematic name of this molecule is [1(4),8(11),15(18),22(25)-tetra(pyridin-4-y)-29H,31H-phthalocyaninato(2-)-κ4N29,N30,N31,N32]zinc. The numbers in parenthesis represent the alternative positions of the substituents.

In one embodiment the phthalocyanine is a tetrakis[methyl α-pyridyl iodonium salt] phthalocyanine of Formula IV (Pc3):

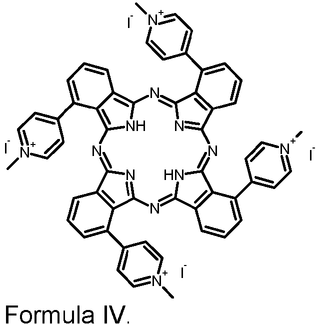

The phthalocyanine may be provided also in a form of another salt. Instead of iodonium also other counter ions may be provided, such as chloride, tosylate, bromine, sulfate, hexafluorophoshate, and the like.

The systematic name of this molecule is 4,4',4",4‴-(29H,31H-phthalocyanine-1(4),8(11),15(18),22(25)-tetrayl)tetrakis(1-methylpyridinium) tetraiodide. The numbers in parenthesis represent the alternative positions of the substituents.

In one embodiment the phthalocyanine is a tetrakis[methyl α-pyridyl iodonium salt] zinc phthalocyanine of Formula V (Pc4):

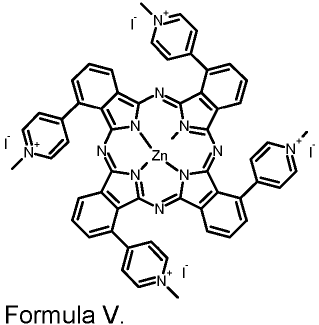

The systematic name of this molecule is {4,4',4",4"'-(29H,31H-phthalocyanine-1(4),8(11),15(18),22(25)-tetrayl-κ 4N29,N30,N31,N32)tetrakis [1-methylpyridiniumato(2-)]}zinc(4+) tetraiodide. The numbers in parenthesis represent the alternative positions of the substituents.

The phthalocyanines of the embodiments have efficient photocatalytic properties, especially photosensitizer properties, which may be applied to a variety of different applications.

The phthalocyanines can be used for disinfecting materials, i.e. to kill microbes by releasing reactive oxygen species. For example they can be used to cover or impregnate a solid substrate and, upon illumination with light, the phthalocyanine dye inactivates the microbes which come into a close distance to the surface. "Inactivate" may for example mean that the amount of colony forming units of microbes decreases.

The present disclosure provides solid materials, surfaces of which are self-disinfecting or self-sterilizing under light, especially visible light, by covering a solid substrate with the aforementioned phthalocyanine dye. Materials impregnated or coated with the phthalocyanines may exhibit disinfecting or sterilizing properties, preferably throughout the material. The present disclosure also provides methods for preparing such materials.

Especially the antimicrobial activity of Pc4 (zinc phthalocyanine of Formula V) was found comparable with or superior to the best results of photodynamic inactivation of microorganisms published so far.

The alpha-pyridyl-substituted phthalocyanines Pc1-Pc4 described herein demonstrate high efficiency in photodynamic inactivation of microbes. Especially Pc4 also demonstrates high stability as a dye for fibrous materials, and once impregnated to fibrous substrate, does not easily release back to an aqueous solution. Back release is a problem in many other substances used for preparation of antimicrobial surfaces. However, when exposed to challenging conditions, and during a long period of time, also the present phthalocyanines will eventually be released from the substrate unless the immobilisation is enhanced.

The phthalocyanines can be used in materials, such as filter materials, for disinfection of gases (e.g. air in ventilation systems) or liquids (e.g. drinking water, hospital sewages, industrial or municipal or private wastewaters). The phthalocyanines can be used in medical materials and products comprising thereof to disinfect any applicable medical environments. The phthalocyanines can be used in packages, such as food packages, medical packages and the like packages and packing materials, especially in applications and environments wherein disinfection is required. The phthalocyanines can be used in textiles, such as photoantimicrobial textiles (PATX), which may be used in clothing, wearables, medical products and the like. With the present products the photoactivity could be maintained in textiles and other applicable fibrous products, and there is no need to include further antibacterial agents, such as (metal) nanoparticles, for example silver nanoparticles, or tetracarboxybenzophenone, inorganic (photo)sensitizers, or other photoactive agents, but the present product can provide antimicrobial functions based only or mainly on the generation of reactive oxygen species by the present phthalocyanines.

### Methods for preparing the photoactive products

The phthalocyanine is incorporated and/or immobilised in the product or other object, which may be an object used for preparing a product, which in intended to cover all applicable means and methods for including, binding and/or attaching the phthalocyanine to the product or object, especially to the fibrous matrix or substrate in the product. The product may be coated or impregnated with the phthalocyanine, and/or with compositions comprising thereof. This can be achieved by using suitable coating or impregnation methods. The coating or impregnation, and durability thereof, can be enhanced by providing suitable aids or other substances, which can enhance the binding, such as by crosslinking, adsorption, entrapment and/or physical linking, of the phthalocyanine to the product, especially to the fibrous substrate or matrix.

The method for preparing the photoactive product comprises
- providing fibrous substrate, which may be an object or in a form of an object,
- providing the phthalocyanine of Formula I,
- providing one or more substances facilitating formation of a photoactive product comprising a fibrous substrate comprising a phthalocyanine of Formula I,
- immobilising the phthalocyanine of Formula I to the fibrous substrate. The substances facilitating formation of a product may comprise immobilising substances or aids, and/or they may comprise one or more other aids, agent or substances disclosed herein, preferably in combination with the immobilising agents or obtained structures and/or materials. Afte the phthalocyanine of Formula I is immobilised to the fibrous substrate, the photoactive product may be obtained, or the method may further comprise forming the photoactive product from the fibrous substrate comprising the phthalocyanine of Formula I.

More particularly, the fibrous substrate provided to the method may be already in the form of the product or a part thereof, or the fibrous substrate may be formed into a form of the (final) product, such as after the immobilisation of the phthalocyanine of Formula I. For example, fibres containing the phthalocyanine of Formula I may be formed into a sheet, a textile, a medical product and/or any other applicable product, such as disclosed herein, for example with suitable sheet-forming methods such as wet-laying methods, by moulding and/or by additive manufacturing. The fibrous substrate may be or may be provided as a layer, such as a sheet, a gauze or a fabric.

An existing object, such as an object in the form of a final product, may be coated or impregnated by using a coating composition, a paint composition or an impregnation composition, in general a treating composition and/or an immobilisation composition, comprising the phthalocyanine of the embodiments, *i.e.* by painting, such as by brushing, spraying, dipping, sizing, soaking, and/or otherwise applying the coating, the paint or the impregnation composition. Any applicable coating means can be used, such as a coating device, for example a blade coating device or the like, which can be used for carrying out a corresponding coating method. A coating may be in the form of a layer on top of the fibrous substrate, on the fibres, and/or on top of any other layer. A coating layer may have a thickness of 1-300 nm, such as 10-200 nm.

The treating, coating and/or impregnation composition may be for example a solution, a suspension, a dispersion or an emulsion, for example an aqueous solution, suspension, dispersion or emulsion. Impregnating may be carried out by dipping and/or soaking the object in or into an impregnation composition, and optionally removing excess composition, for example by pressing, with a blade and/or other applicable method. An aqueous composition is preferred as it is environmentally friendly and safe for the present products. An emulsion may include one or more emulsifying agents.

An "aid", or an "additive", an "agent" or a "substance", as used herein refers to any suitable substance used for facilitating the incorporation of the phthalocyanine to the fibrous support/substrate, for example binding and/or immobilising with an aid such as a binder or a crosslinker; a matrix and/or support/substrate material; and/or to a substance used for obtaining other properties of the product with other aids or substances, such as a masking aid; an emulsifier; a wetting agent; a thickening agent and/or a rheology modifier, and/or other aids, agents and/or additives disclosed herein. The aids, additives, substances and/or agents disclosed herein are included in the compositions and/or in final products in amounts capable of providing/obtaining the intended effect. A skilled person can easily determine suitable concentrations of agents. In specific examples the product does not comprise one or more of the agents or substances disclosed herein.

In one embodiment the substances facilitating formation of the product comprise one or more immobilisation agents, such as one or more of binders, crosslinking agents, entrapment and/or coating agents for attaching, binding and/or immobilising the phthalocyanine of Formula I to the fibrous substrate. The phthalocyanine may be immobilised, such as entrapped and/or covered, with one or more substances, which bind to the fibrous substrate.

In one embodiment the substances facilitating formation of the product comprise one or more binders and/or crosslinking agents for covalently and/or permanently binding the phthalocyanine of Formula I to the fibrous substrate. Such permanent binding may be desired in products, which have a very long lifespan, which are exposed to harsh conditions, which have high quality standards, and/or wherein it is not desired to include for example a thick coating or other type of specific immobilisation means.

The products and parts thereof disclosed herein can be obtained with the methods disclosed herein.

One example provides a coating comprising the phthalocyanine, preferably on an object or a product. The coating may be prepared using methods known in the art, for example by using fibrous material as a carrier/substrate. The substrate may be for example cellulosic material. Cellulosic materials disclosed herein may refer to fibrous celluloses/cellulosic and/or cellulose-derived fibres, which may be modified or unmodified. In some examples the fibrous material may also comprise fibrillar cellulose, which is obtained by mechanically disintegrating fibrous cellulose, such as pulp, to release cellulose fibrils. Fibrous cellulose, such as microfibrillar cellulose or nanofibrillar cellulose (NFC, CNF) represent different type of material compared to fibrous cellulose, and is characterized by a high aspect ratio of cellulose fibrils, such as generally having a number average fibril diameter or 200 nm or less, such as 100 nm or less or 50 nm or less, and/or a number average fibril length of 2 micrometres or less, such as 1 micrometre or less, for example 0.5-2.0 micrometres. The dimensions can be determined microscopically. Fibrillar cellulose exhibits specific properties, such as pseudoplastic properties in aqueous dispersion, i.e. the materials are shear-thinning non-Newtonian/pseudoplastic materials and exhibit very high viscosity already at a low concentration due to their exposed hydroxyl groups and high aspect ratio. In specific examples the substrate is or comprises fibrillar cellulose, for example in combination with fibrous cellulose. In another example the fibrous substrate does not comprise fibrillar cellulose and/or comprises only or mainly fibrous cellulosic material and optionally also synthetic fibres. Fibrillar celluloses can be also provided as a substance facilitating formation of the product.

For example, one or more aids and/or agents disclosed herein may be mixed with the phthalocyanine, for example in a carrier and/or solvent, which may comprise water or aqueous solution, organic solvent and/or oil, or by adding such carrier and/or solvent, which may result in formation of a coating composition. A method for coating an object comprises providing and/or forming a coating composition comprising the phthalocyanine and one or more aids/agents and optionally other ingredients, and applying the coating composition onto the object to be coated. Analogously, a method for impregnating an object comprises providing and/or forming an impregnation composition comprising the phthalocyanine of the embodiments and one or more aids/agents and optionally other ingredients, and impregnating the object to be impregnated with the impregnation composition.

The crosslinking can be obtained by covalent crosslinking or by non-covalent crosslinking. In covalent cross-linking covalent bonds are formed between the phthalocyanine and the substrate/matrix material, and/or in the substrate and/or matrix material. This can be obtained by providing one or more crosslinking agents, such as grafting agents, using external energy to facilitate the crosslinking, such as elevated temperature and/or UV light, and/or with other suitable means and reagents. Non-covalent crosslinking can be obtained by providing one or more agents capable of forming ionic cross-links/physical cross-links between the phthalocyanine and the substrate/matrix material. Covalent cross-linking or covalent binding may be preferred for products, which are exposed to moisture conditions and/or mechanical stress, as the phthalocyanine would be permanently bound to the substrate and can tolerate the challenging conditions. Examples of binders and/or crosslinking agents include carboxylic acids, such as polycarboxylic acids, for example citric acid; polyurethanes and acrylics, as well as other agents disclosed herein, such as coating agents, and may be provided as a solution, a dispersion or an emulsion, such as polyurethane or acrylic emulsion. The type of the composition may depend on the type of agents(s) included, and the composition may comprise two or more agents, which may be provided and mixed to obtain a mixture.

The crosslinking agent may comprise one or more of phthalic anhydride and/or maleic anhydride, such as polymaleic anhydride. A maleic acid anhydride grafted polymer, such as maleic anhydride grafted or functionalized polyolefin, can be obtained, which facilitates coupling with compatible polymers, and/or with cellulosic material.

Crosslinking agents especially suitable for cellulosic materials include amino-based chemicals, such as triazines, amides, and ureas, for example 1,3,5-triacryloylhexahydro-1,3,5-triazine (TAHT) and dimethyloldihydroxyethyleneurea (DMDHEU).

The immobilising agents, such as binders and/or crosslinking agents, may be provided in a mixture with the phthalocyanine and optionally other substances. In one embodiment the binding is by covalent attaching, i.e. by a covalent bond, i.e. the phthalocyanine of Formula I is covalently bound/crosslinked to the fibrous substrate. In such case one or more crosslinking/grafting/coupling agents may be provided, such as combined with the fibrous substrate and the phthalocyanine. Covalent cross-linking may comprise providing a spacer/linker between the fibrous substrate and the phthalocyanine, such as a diamine spacer or aminoethyleneglycol spacer. One or more suitable catalyst may be provided and used for modification and/or for crosslinking, such as cerium oxide, Cu(I), or TEMPO (2,2,6,6-tetramethylpiperidine-1-oxyl radical).

The phthalocyanine may be activated for the crosslinking, for example with carbonyldiimidazole (CDI), for example in DMSO, and combined with modified cellulose, such as periodate-modified cellulose, optionally further modified by introducing diamine spacers, to crosslink the phthalocyanine with the cellulose via the linkers. The cellulose may be also modified with epichlorohydrin before covalent grafting.

In one example aminoethyleneglycol spacer arms are attached to the phthalocyanine to facilitate its grafting to carboxylic acid groups present in cellulose, such as cotton. A first step comprises functionalization of phthalocyanine with 1,2-bis(2-aminoethoxy)ethane monoprotected with tert-butyloxycarbonyl (Boc) in the presence of dicyclohexylcarbodiimide (DCC)/1-hydroxybenzotriazole (HOBt). After acid deprotection of the amino groups, the desired phthalocyanine amino derivative is attached methacrylic acid - Ce(IV) modified cellulose.

In one example phthalocyanine and quaternary ammonium salt groups are introduced to cellulose.

One or more polycarboxylic acids may be included in the coating composition, such as one or more selected from citric acid, isocitric acid, tricarballylic acid, 1,2,4-butanetricarboxylic acid (BTRCA), 1,2,3,4-butanetetracarboxylic acid, oxalic acid, tartaric acid, succinic acid, malic acid, malonic acid, glutamic acid, aspartic acid, glutaric acid, and 1,3,5-pentanetricarboxylic acid. The polycarboxylic acid may be provided as dissolved in a solvent, such as one or more of an aqueous solvent, water, alcohol, ether, ethyl acetate, ketone or DMSO. When polycarboxylic acid is added, it may result in crosslinking and/or polymerisation of polycarboxylic acid molecules producing a network of crosslinked and/or polymerised polycarboxylic acid molecules on the surface of the fibrous substrate. This can be facilitated by curing the polycarboxylic acid at an elevated temperature. The curing may be facilitated by providing a catalyst. The catalyst may comprise for example one or more of sodium hypophosphite (SHP), an SHP hydrate, monosodium phosphate (MSP), and MSP hydrate. Polycarboxylic acids are especially suitable for textiles, preferably textiles comprising synthetic or semi-synthetic fibers.

Fibers, such as cellulosic fibers, can be modified with agents such as phosphorylating agents, oxidizing agents, such as TEMPO or periodate, for example sodium periodate, organosilylating agents, cyanuric chloride, Cu(I)-catalyzed Huisgen 1,3-dipolar cycloaddition reagent (Click-Chemistry reaction), acylating agents to acylate hydroxyl groups, or the like, which may be considered as crosslinking agents or agents facilitating crosslinking. Modified cellulosic fibres can be obtained, which contain one or more groups, which can be used in the crosslinking and/or other chemical reactions. In one example the agent comprises 1,3,5-triazine linker, which can be used to graft the phthalocyanine to cellulose without preliminary chemical modification of the cellulose. Oxidised cellulose contains carboxylic groups, which can be used in the crosslinking process.

Cyanuric chloride can be used in aqueous environment, i.e. in aqueous solvent, thus avoiding the use of organic solvents, which is an environmentally friendly method. The cellulosic fibrous substrate may be treated first with cyanuric chloride and subsequently by grafting with 1,3,5-triazine linker.

In one embodiment the product and/or the composition used for preparing the product, i.e. the substances facilitating formation of the product, further comprise one or more aids/agents selected from an additional organic polymer substrate, a hindered amine light stabiliser, a UV absorber. a hydrophobic top coating, a thickener and a rheology modifier. Such substances can be used for enhancing the longevity of the phthalocyanine in the product or fibrous substrate.

Organic polymer substrates refer to any suitable organic polymers, which can supplement the fibrous substrate, for example by adding mechanical support, such as rigidity, acting as matrix material, which can enhance the phthalocyanine longevity, and/or entrapping the phthalocyanine, or they may act as a coating or a support layer, which may entrap and/or bind other agents disclosed herein, including the phthalocyanine. The organic polymer may comprise one or more polymers that can be combined with the fibrous substrate, such as one or more of thermoplastic polymers, thermosetting polymers, and/or the like. Examples of the organic polymer substrates include polyurethanes, silicones, polyvinyl alcohols and thermoplastic polymers, such as acrylic and urethane polymers, for example polyacrylates, (polyacrylic acids), poly(methyl methacrylates), polyethylene, for example low density polyethylene (LDPE), polypropylene, polyethylene terephthalate (PET), polyvinyl chloride (PVC), polylactic acid (PLA), polyvinylidene chloride (PVDC), and/and ethylene-vinyl acetate, which may be also used as a binder.

The method may comprise forming a coating on the fibrous substrate. The coating may comprise the present phthalocyanine and optionally one or more other agents, such as binders and/or crosslinking agents. Coatings or coating compositions may include substances such as fumaric acid, phthalic anhydride and/or maleic anhydride, and/or sizing agents, plasticizers (DEP, DOM, DINP, DIDP), organic polymers such as PHA, polysaccharide, PFAS, polyethylene (PE), polypropylene (PP), acrylic polymers, such as acrylic copolymer latex/aqueous acid-modified polyolefin, and the like, biowax, such as vegetable oil based waxes may be used for food coatings, for example for paper products. The coatings may be formed from corresponding organic monomers in a suitable polymerisation reaction, such as a free radical polymerisation reaction.

A hydrophobic top coating, or a film coating, may be provided and/or formed in products, especially in packaging materials, textiles or other products by adding one or more organic polymers, such as polyurethane, polyvinyl alcohol, polyacrylates, polymethacrylates, silicone, biowax, PET and/or LDPE to the composition comprising the phthalocyanine, and forming the coating or film from the composition, which may be in the form of a solution, a dispersion or an emulsion. The organic polymers may be the same as used as organic polymer substrates and/or they may be different. Alternatively the fibrous material already treated with the phthalocyanine can be subsequently treated/coated with the hydrophobic top coating by providing a top coating composition comprising the one or more organic polymers, for example in an amount in the range of 2-70% by weight, and any required additives in a suitable solvent, such as plasticiser, for example DEP, DOM, DINP, and/or DIDP, rosin and the like, which may be provided in an amount in the range of 1-30% by weight each.

The top coating can protect clothing and wearable, packed materials and/or the packing materials from moisture and other substances. The top coating may act as a barrier, such as a moisture/water barrier, a gas barrier, a solvent barrier, a grease barrier and/or a UV barrier.

In one embodiment the product further comprises one or more aids/agents selected from an emulsifier and wetting agent. Emulsifiers and wetting agents can be used for forming the impregnating and/or coating compositions, and to facilitate the application of the compositions to the fibrous substrate. For example the impregnation can be facilitated by selecting suitable emulsifying agents and/or wetting agents, and/or the properties of the final product can be affected and/or controlled by using these agents.

In one embodiment the product further comprises one or more aids/agents selected from a thickening agent and a rheology modifier. By controlling the rheological properties of the composition, such as viscosity, it is possible to affect flow behaviour, the penetration of the composition to the fibrous substrate, (homogenous/even) spreading of the composition onto and/or into the fibrous substrate, enhance texture, and/or improve stability. The rheology modifiers may be Newtonian or non-Newtonian fluids, such as pseudoplastics (shear-thinning in a dispersion), which lose their viscosity as shear rate increases and thus can be used for obtaining a coating on the fibrous substrate without penetrating the fibrous substrate too much. Preferably the thickeners and rheology modifiers are organic, such as organic polymers. Examples of rheology modifiers include alkali swellable emulsions (ASE), hydrophobically modified alkali swellable emulsion (HASE); hydrophobically modified ethoxylated urethane resin (HEUR); hydroxyethyl cellulose (HEC); nonionic synthetic associative thickener (NSAT); starch; celluloses and derivatives thereof such as methyl cellulose, hydroxy ethyl cellulose (HEC), carboxy methyl cellulose (CMC), hydroxy propyl cellulose (HPC), and hydrophobically modified HEC; fibrillar cellulose such as nanofibrillar cellulose.

The present phthalocyanines exhibit a cyan/green colour, which dyes the treated products. This is not always desired, as the appearance of the product may suffer from such colour. To mask the colour or otherwise alleviate the visibility of the colour certain solutions are provided in this disclosure.

One or more dyes, pigments or other masking substances may be incorporated in the product to mask, change or otherwise cover the colour of the phthalocyanine or the product. The dyes, pigments or masking substances may be provided together with the phthalocyanine, for example as a mixture, and/or they may be added later, for example in an additional layer, wherein they may at least partly cover the phthalocyanine. However as the phthalocyanine requires light, any covering substances shall not form completely opaque layer on the phthalocyanine, or at least the wavelengths required for the photoactivation shall pass the covering substances.

The pigment may comprise one or more organic pigments and/or one or more inorganic pigments. Examples of organic pigments comprise azo pigments, anthraquinones, benzimidazolones, dioxazines, phthalocyanines, tetrachloroisoindolinones, quinacridones, isoindolines, perylenes, pyrrolo-pyrroles, such as diketopyrrolo-pyrrole. The pigment may be incorporated in the polymeric substances disclosed herein, such as in a polymeric substrate, matrix and/or coating prepared as disclosed herein. The amount of dye and/or pigment incorporated may be in the range of 0.1-15% such as 0.1-10%, for example 0.1-5% by weight, based on the polymer.

In some cases it is desired to protect the phthalocyanine, the fibrous substrate and/or other additives from light or a specific light wavelength. In such cases one or more hindered amine light stabilisers (HALS) and/or a UV-absorbers may be provided, for example on top of the substrates and/or layers to be protected, or in the substrate or the layer.

A hindered amine light stabiliser (HALS) refers to chemical compounds containing an amine functional group, such as a derivative of 2,2,6,6- tetramethylpiperidine. Hindered amine light stabiliser can be used to protect polymers of the substrate, as well as the phthalocyanine, from the effects of photo-oxidation. HALS removes free radicals so it may not be suitable for use with cationic phthalocyanines, but may be used with non-cationic forms, such as non-cationic ZnPc.

A UV absorber, or an UV blocker, refers to a compound which can absorb light of UV range. By filtering out harmful UV radiation they can provide protection against the degradation of the product materials, such as the fibrous substrate, the phthalocyanine, any of the additives and the like. As the phthalocyanine exhibits good activity at visible light range, filtering out UV range would not be harmful or detrimental for the photoactivity. Examples of UV absorbers include benzotriazoles such as Tinuvin 327 or Tinuvin 328 by BASF, benzophenones such as UV-53 or 1UV-9, triazines, and cyanoacrylates. The UV absorber can be immobilised in coatings, substrates and/or other additives disclosed herein, such as with the methods disclosed herein.

The further additives or aids, and obtained structures and materials, can be provided together with the binders, crosslinking agents and obtained crosslinked/immobilised materials, such as polymeric matrix or other substrates, coatings and the like disclosed herein, wherein they may be also immobilised and supported by the other structures, which enables providing products with new and synergistic properties.

In practical examples papers and cotton textiles are soaked in an aqueous composition comprising the phthalocyanine and acrylic emulsion, or an aqueous composition comprising the phthalocyanine and polyurethane emulsion. The treated papers and textiles ae allowed to cure, and the obtained photoantimicrobial products are tested for photoactivity and stability. It was found that the phthalocyanine remained active for a time period of substantially higher order than demonstrated previously, such as in Example 4. No substantial decrease in activity, or substantial leaching of the phthalocyanine was detected during testing, which indicates that the obtained products are suitable for consumer use, such as for clothes, and for medical use. Maleic anhydride can be used for crosslinking the phthalocyanine to the substrates to provide very similar results.

### Packing material

In one embodiment the object or the product is or comprises packing material, such as a package, container, wrapping material or the like, or a part thereof. The packing material may comprise food packing material or medical packing material. It is possible to prepare and/or obtain packages or containers, such as food packages or medical packages, which are reusable, as the photoactivity can keep the packages sterile for a prolonged time.

The packing material may comprise cellulosic material, such as cardboard and/or paper. Common examples of packing material or packages are boxes, which are commonly made of cardboard. Most packing materials comprises one or more cellulosic sheets, which may be treated by coating and/or impregnating. Also other applicable packing materials, such as form-pressed materials, can be similarly coated and/or impregnated.

The packing materials may be further supplemented with one or more organic polymer substrates, which can bind the phthalocyanine, provide support for the product, act as a coating and/or barrier, and/or also act as a support for further additives.

Packing materials may further comprise a hydrophobic top coating, which can act as a moisture barrier, but also stabilise, immobilise and/or protect the phthalocyanine.

### Textiles and products comprising textile

In one embodiment the object or the product comprises or is a textile. The textile may be a fabric or cloth. The textile may be woven or nonwoven. More particularly, textile refers to any material made of interlacing fibres. One example of a textile is a gauze, which may be a nonwoven gauze.

Fabric refers to any material made through weaving, knitting, spreading, crocheting, or bonding that may be used in production of further goods (garments, etc.). In case of clothes, the fabric is usually woven.

In embodiments the product comprises a clothing, a wearable, a medical product, a filter or a part thereof.

A filter may contain fibrous material, such as paper or textile, for example a gauze. The filter may be air filter or liquid filter, wherein the air or the liquid is arranged to flow through the filter.

Fibrous material, as used in this disclosure, may comprise or (substantially) consist of natural fibres, synthetic fibres, especially organic synthetic fibres, or a combination thereof. Additives common in the art may be included in minor amounts. Examples of natural fibres include fibres from plant and animal sources, such as cellulosic fibres. Examples of synthetic fibres include nylon, acrylic, polyester, and rayon.

Natural fibres may comprise for example natural cellulosic fibres and/or cellulose-containing fibres, such as cotton fibres, flax fibres, hemp fibres, jute fibres, ramie fibres, coir fibres, sisal fibres, abaca fibres, kenaf fibres; or other non-cellulosic natural fibres such as silk, wool and the like fibres. The cellulosic material may comprise natural cellulosic fibres, such as cotton fibres, flax fibres, hemp fibres, jute fibres, ramie fibres, coir fibres, sisal fibres, abaca fibres, and/or kenaf fibres.

In one example the cellulosic material comprise artificial fibres derived from cellulose. These may comprise one or more of regenerated/spun fibres, such as electrospun or wet spun fibres, for example Tencel^{™} fibres, Lyocell^{™} fibres, Spinnova^{™} fibres, Norratex^{™} fibres, Infinna^{™} fibres, Kuura^{™} fibre, Ioncell^{™} fibres, and/or viscose (Rayon), Modal and/or the like other manufactured cellulose fibres. The regenerated cellulose fibres may be prepared by dissolving pulp/cellulosic material and spinning the dissolved pulp/cellulose into (regenerated) fibres, such as by dry jet-wet spinning (for example Lyocell process). Viscose can be prepared with viscose process, which uses alkali and carbon disulfide.

Textiles can be divided into two categories: blended textiles, such as polycotton, and monomaterials.

The textile may comprise cellulosic material, such as cellulosic fibres, and other fibres, such as natural fibres and/or synthetic fibres. The cellulosic material may comprise natural cellulosic fibres and/or semi-synthetic/artificial fibres derived from cellulose.

Textiles may be treated with agents such as resins and binders, for example as acrylic emulsions, polyurethane dispersions/emulsions, PVC/PVDC emulsions, or PLA polymers.

### Medical products

Medical products can be prepared with the photoactive products discussed herein, such as products comprising textiles, packing materials and/or other fibrous materials. For example it is possible to obtain photoactive coatings on medial products, or to obtain impregnated medical products. Woven or nonwoven textiles or other materials can be applied, for example formed into medical products or incorporated in medical products.

The medical products may comprise dressings, patches and the like, which may comprise or be based on woven or nonwoven fibrous substrate, such as a gauze or the like. Such products can be used for light-based medical treatment, such as UV-based or visible light based skin treatments. The fibrous substrate may comprise cellulosic fibres and/or fibrils, and optionally also synthetic fibres. Such products may be prepared by treating a product in the final form with the phthalocyanine, or by treating fibrous substrate or fibrous material first with the phthalocyanine, the subsequently forming the medical product from the treated fibrous substrate/support/material.

One example provides photoactive filaments, which can be used as antimicrobial filaments for preparing medical products or other products. Such products can be prepared by additive manufacturing (3D printing). An additive manufacturing ink can be prepared and/or provided comprising the photoactive filaments in a suitable solvent or ink base, and providing any necessary additives, such as thickening agents, binders, and the like. The filaments may be prepared from cellulosic material, such as from cellulose pulp or other fibrous cellulose, which may be mechanically treated to obtain filaments formed by cellulose fibres with suitable size and properties. Also fibrillar cellulose may be used in addition or instead of fibrous cellulose. The ink may be prepared by combining the treatment composition disclosed herein with the fibrous support, such as the filaments or other fibrous and/or fibrillar material.

A method for preparing (photoactive) products by additive manufacturing may comprise
- providing photoactive additive manufacturing ink comprising fibrous substrate/material/support comprising the phthalocyanine,
- providing an additive manufacturing device,
- printing a product with the additive manufacturing device from the additive manufacturing ink comprising fibrous substrate/material/support comprising the phthalocyanine.

### Use of the products

The objects disclosed in previous may be included in products for use in the applications described herein. Specific examples of the products include self-disinfecting clothes, self-disinfecting cloths, self-disinfecting fabrics for sanitary use (bed linen, etc), self-disinfecting protecting masks, suits and/or gloves, and self-disinfecting filters for water and/or air. Examples of larger-scale applications include disinfection filters for air-conditioning systems; self-cleaning surfaces for open water reservoirs and swimming pools; disinfection systems for hospital and other biohazardous waste waters.

One example provides a method for providing reactive oxygen species, the method comprising
- providing the product or the object described in previous, and
- irradiating the product or the object with light,
to obtain reactive oxygen species.

In general a method for providing reactive oxygen species may be a therapeutic method or non-therapeutic method. In general the method for sterilizing or disinfecting materials are considered non-therapeutic. In one example the method for providing reactive oxygen species is a non-therapeutic method.

The reactive oxygen species are chemically reactive chemical species containing oxygen. Examples of reactive oxygen species include e.g. peroxides (e.g. hydrogen peroxide H₂O₂), superoxide anion (O₂⁻), superoxide radical (O₂•), hydroxyl radical (OH•) and singlet oxygen (¹O₂).

The light includes visible light, but also a part of UV-range and IR-range, such as light having a wavelength λ in the range of 315-850 nm, 315-750 nm, or 350-750 nm, for example in the range of 400-800 nm, 380-780 nm or 400-750 nm, or any range between the lower and upper values disclosed herein, which may be considered as visible wavelength ranges. One wavelength optimum of the phthalocyanine molecule of the embodiments is in the range of 600-750 nm and one is at about 450 nm. The light may be natural light (sunlight) or it may be originated from one or more artificial light sources, such as a lamp, LED, laser or the like. In one example the method comprises providing a light source arranged to illuminate the phthalocyanine of the embodiments or the object described in previous.

When the phthalocyanine of the embodiments or the object described in previous is irradiated with light, a photon is absorbed by the phthalocyanine i.e. the sensitizer. The absorbed photon excites the sensitizer to one or more energy-rich state(s). The excited sensitizer undergoes internal reactions that result in the chemical alteration of a substrate. This may occur in two types of reactions, namely Type-I and Type-II photoreactions, producing reactive oxygen species among others.

Type-I photoreactions are characterized by a dependence on the target-substrate concentration. In anoxic environments, the light induced excitation of the photosensitizer can promote an electron to a higher energy state. At this point a variety of reactions can take place. For example, this excited photosensitizer can react directly with organic substrates by electron exchange, filling the hole vacated by the excited electron, producing an oxidized substrate and reduced photosensitizer. Guanine, the most susceptible base to oxidation, is the presumed target leading to the formation of various oxo-guanine complexes and ultimately the decomposition of cellular DNA. The reduced photosensitizer can react with oxygen to produce superoxide anions (O₂⁻) which can then form the highly reactive hydroxyl radical (OH•). The excited photosensitizer can also react with superoxide radicals (O₂•) to produce superoxide anions (O₂⁻) which can then create the highly reactive hydroxyl radical (OH•).

The Type-II mechanism which is dependent on oxygen concentration also involves excitation of the photosensitizer with light, but in this mechanism energy is transferred to the ground state of molecular oxygen resulting in excited singlet oxygen (¹O₂) which goes on to destroy cellular function. The photosensitizer and oxygen interact through the triplet states because oxygen has a unique, triplet-ground state and low-lying excited states. The energy required for the triplet to singlet transition in oxygen is 22 kcal mol⁻¹ which corresponds to the energy of a wavelength of 1274 nm (infrared light). The energy needed to produce singlet oxygen is relatively low.

One example provides a method for method for inactivating micro-organisms, comprising providing reactive oxygen species to inactivate the micro-organisms by oxidative action. The micro-organisms may be contained in the object containing the phthalocyanines of the embodiments, or in a material, which is in contact or in a close vicinity, such as 0-5 mm, with the object. For example, the method may be used to inactivate micro-organisms on a surface or inside an object treated with the phthalocyanines of the embodiments, or in air or liquid, such as an aqueous liquid, passing the surface or the interior of the object, for example filter.

The present disclosure provides a method for inactivating micro-organisms, comprising
- providing the photoactive product, and
- irradiating the phthalocyanine or the object with light to obtain reactive oxygen species
- to inactivate the micro-organisms by oxidative action.

One example provides a method for disinfecting materials, comprising providing reactive oxygen species with the above method to the material to disinfect the material by oxidative action. One embodiment provides a method for disinfecting a target, comprising providing reactive oxygen species with the above method to the target to disinfect the material by oxidative action. The target or the material may refer to a surface, air, liquid, such as water, aqueous liquid or other liquid, or a product such as the products described herein or a surface thereof, which may be brought into contact with the reactive oxygen, or which may be used to further disinfect other targets, materials or substances. Disinfecting, and also sterilizing, refer to an action of providing disinfecting or sterilizing effect in a target or a material, such as inactivating micro-organisms. In general, the formed reactive organic species react and rupture the cell wall of the microbes. The reactive oxygen species may be considered as disinfecting or sterilizing agents.

One example provides the use of the phthalocyanines of the embodiments for providing reactive oxygen species. One example provides the use of the phthalocyanines of the embodiments for inactivating micro-organisms or disinfecting or sterilizing materials or targets, such as ones described herein.

The agents of the embodiments may be used in methods utilizing the principle of photodynamic inactivation (photoinactivation) or photodynamic antimicrobial chemotherapy, PACT. It employs a photosensitizer of the embodiments that generates, upon light irradiation, highly reactive species of singlet oxygen ¹O₂, which in turn destroy the treated cells via oxidative action. This phototoxic effect has important advantages in antimicrobial treatments. Firstly, the lifetime of singlet oxygen is long enough to diffuse micrometres (in liquids) or even millimetres (in the air), thus allowing antimicrobial treatment on filters and even on biofilms without direct contact between a photosensitizer and a pathogen cell. It also enables the use of PACT materials in filters and bandages. Secondly, photoinactivation is a universal process and allows for treatment of various species of microorganisms simultaneously, also being efficient against multi-drug resistant (MDR) microbes. Thirdly, the phototoxic action is a general oxidation process and does not induce resistance compared to antimicrobial drugs.

### Methods for preparing the phthalocyanines

One example provides a method for preparing 3-(pyridin-4-yl)benzene-1,2-dicarbonitrile, the method comprising
- providing a mixture of pyridine boronate ester, triflate phthalonitrile, palladium catalyst, and K₃PO₄ in solution, such as dissolved in water and toluene, and heating and stirring, such as at a temperature in the range of 90-100°C, for example at about 90°C for 1-3 h, for example about 2 h, and
- recovering the 3-(pyridin-4-yl)benzene-1,2-dicarbonitrile from the solution.

One example provides a method for preparing a phthalocyanine of Formula II, 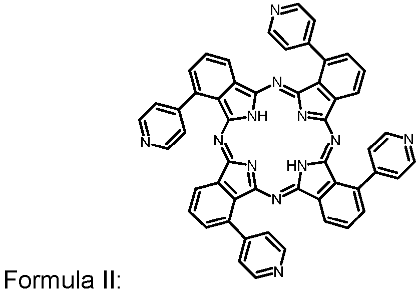 the method comprising
- providing lithium dissolved in a solvent, preferably at a temperature in the range of 90-100°C, for example at about 90°C under argon atmosphere,
- cooling the mixture to room temperature,
- adding 3-(pyridin-4-yl)benzene-1,2-dicarbonitrile, preferably under argon atmosphere
- reacting at heating, such as at a temperature in the range of 90-100°C, for example at about 90°C, preferably in mixing, and
- recovering the phthalocyanine of Formula II.

In one example the method comprises
- providing a mixture of the obtained phthalocyanine of Formula II and Zn(OAc)₂·2H₂O in a solvent, and
- recovering the obtained tetrakis[α-pyridyl] zinc phthalocyanine of Formula III

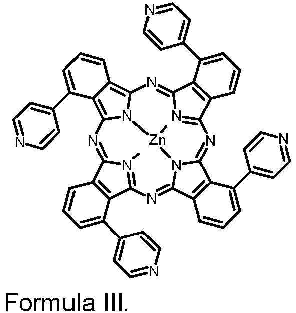

In one example the method comprises
- providing a mixture of the obtained phthalocyanine and methyl iodide in a solvent,
- reacting the mixture at heating, such as at a temperature in the range of 40-60°C, for example at about 45°C for 6-24 h, for example about 18 h,
- cooling the mixture, and
- recovering the obtained tetrakis [methyl α-pyridyl iodonium salt] phthalocyanine of Formula IV

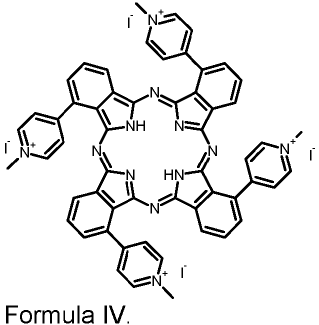

One example provides a method for preparing a tetrakis[α-pyridyl] zinc phthalocyanine of Formula III, 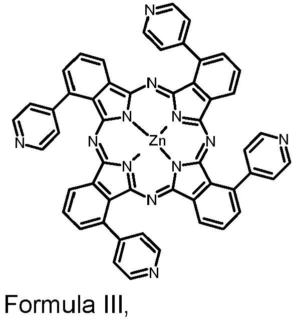 the method comprising
- providing 3-(pyridin-4-yl)benzene-1,2-dicarbonitrile
- heating the 3-(pyridin-4-yl)benzene-1,2-dicarbonitrile and zinc acetate in dimethylaminoethanol at reflux, such as at a temperature in the range of 120-150°C, for example at about 140°C for 6-24 h, for example about 12 h,
- cooling the mixture, and
- recovering the obtained tetrakis[α-pyridyl] zinc phthalocyanine of Formula III.

In one example the method comprises
- providing a mixture of the obtained tetrakis[α-pyridyl] zinc phthalocyanine and methyl iodide in a solvent,
- mixing at heating, such as at a temperature in the range of 40-60°C, for example at about 45°C for 6-24 h, for example about 18 h,
- cooling the mixture, and
- recovering the obtained tetrakis[methyl α-pyridyl iodonium salt] zinc phthalocyanine of Formula V

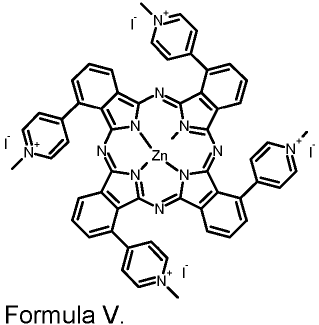

### Examples

### Example 1. Synthesis of phthalocyanines Pc1-Pc4

### 1) 3-(Pyridin-4-yl)benzene-1,2-dicarbonitrile

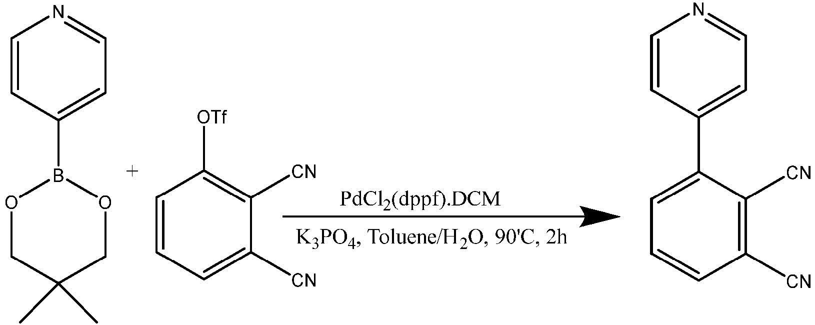

A mixture of pyridine boronate ester (0.726 g, 3.78 mmol), Triflate phthalonitrile (1.0 g, 3.78 mmol), PdCl₂(dppf)·DCM (0.092 g, 0.1134 mmol), K₃PO₄ (2.4 g, 11.31 mmol) dissolved in 20 ml water and toluene (20 ml). The reaction mixture wasstirred at room temperature and saturated by bubbling with argon for 15 minutes. After saturation, the mixture was heated at 90°C for 2h. The product was extracted with CHCl₃ and washed with brine and dried over anhydrous Na₂SO₄ and evaporated under reduced pressure to get 105 mg of crude product. The pure product was isolated by re-precipitating with CHCl₃/hexane mixture (0.60 g, 60%). The product 3-(pyridin-4-yl)benzene-1,2-dicarbonitrile may be also called as pyridine phthalonitrile or 3-pyridyl phthalonitrile.

### 2) Tetrakis[α-Pyridyl] phthalocyanine Pc1

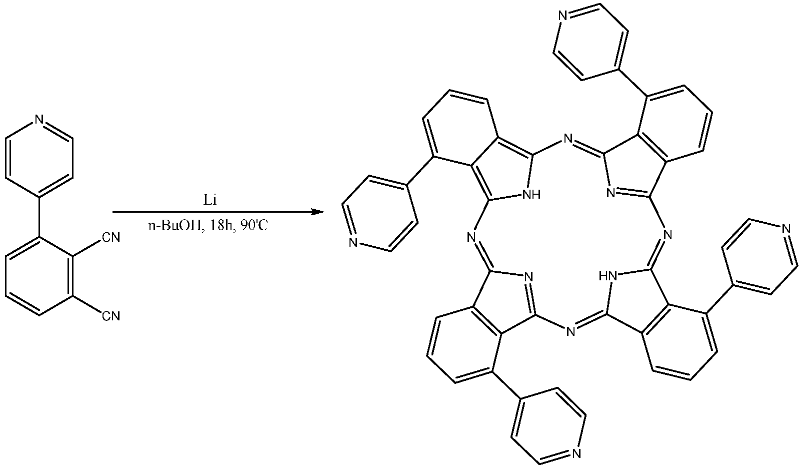

Freshly cut piece of lithium (57 mg, 8.212 mmol) was dissolved in n-butanol (5.7 ml) at 90°C under argon atmosphere. The reaction mixture was allowed to cool to room temperature and pyridine phthalonitrile (80 mg, 0.3898 mmol) was added to the above solution under argon atmosphere. The temperature was increased to 90°C and stirred for 18 h. The product was extracted with CHCl₃ and washed with water several times till the pH of the aqueous layer was neutral. The organic layer was evaporated under reduced pressure to get crude residue. The residue was washed with ACN and later purified by column chromatography (neutral alumina, 1% EtOH in CHCl₃) to get phthalocyanine free base (40 mg, 50%). MS (ESI-TOF): [M+H]⁺ calculated for C₅₂H₃₀N₁₂⁺, 823.2795; found, 823.2832

### 3) Tetrakis[α-pyridyl] zinc phthalocyanine Pc2

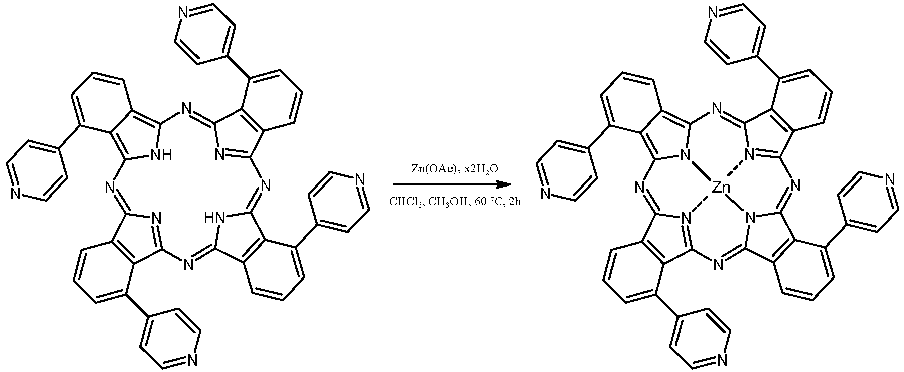

Free base of pyridine phthalocyanine (12 mg, 0.0146 mmol) was dissolved in CHCl₃ (1.5 ml) and Zn(OAc)₂·2H₂O (12 mg, 0.0547 mmol) in 120 µl H₂O was added into it. The product was extracted with CHCl₃ (20 ml) and washed with water (25 ml x 3), dried over anhydrous Na₂SO₄ and evaporated under reduced pressure to yield crude residue. The product was purified with column chromatography (neutral alumina, 10% EtOH in CHCl₃) and later washed with diethyl ether and ACN to get pure compound (11 mg, 85%). MS (ESI-TOF): [M+H]⁺ calculated for C₅₂H₂₈N₁₂Zn⁺, 885.1929; found, 885.1970

### 4) Tetrakis [methyl α-pyridyl iodonium salt] phthalocyanine Pc3

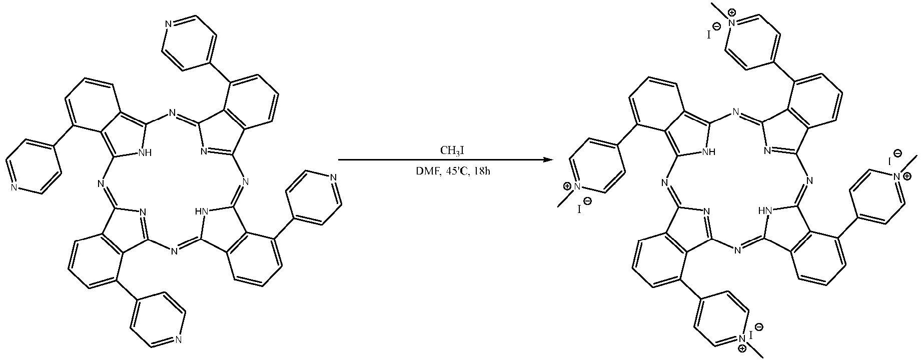

Free base of pyridine phthalocyanine (15 mg, 0.0182 mmol) was dissolved in DMF (3 ml) and methyl iodide (1 ml, 0.0161 mmol) was added into it. The reaction mixture was stirred at 45°C for 18 h. The reaction mixture was cooled in an ice bath and product was precipitated by adding dimethyl ether (15 ml) into it. The solid filtered was washed several times with diethyl ether and later with acetone to get pure product (14.8 mg, 58.32 %). MS (ESI-TOF): [M]⁴⁺ calculated for C₅₆H₄₂N₁₂⁴⁺, 220.5914; found, 220.5888; [M+I] ³⁺ calculated for C₅₆H₄₂IN₁₂³⁺, 336.4233; found, 336.4203

### 5) Tetrakis[α-pyridyl] zinc phthalocyanine Pc2 (Direct method)

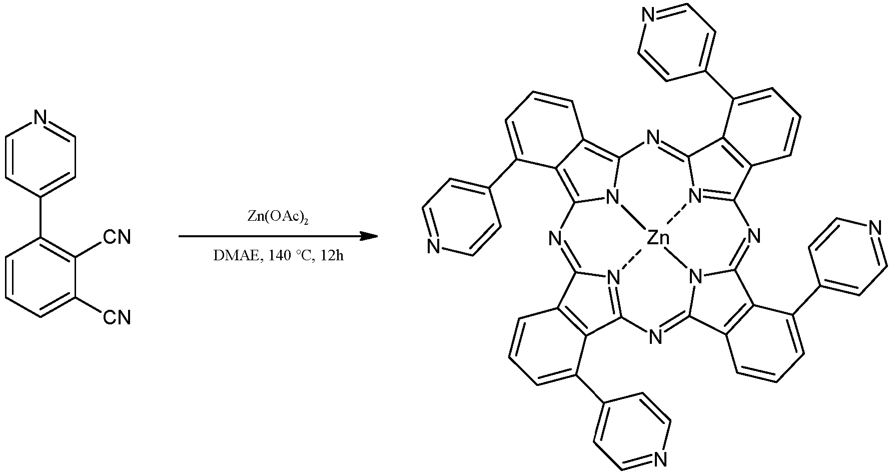

A mixture of pyridine phthalonitrile (77 mg, 0.3752 mmol) and zinc acetate Zn(OAc)₂ (84.67 mg, 0.4615 mmol) in dimethylaminoethanol (DMAE, 810 µl) was heated at reflux at 140°C for 12 h. The reaction mixture was cooled to room temperature and the product was precipitated by adding a mixture of MeOH/H₂O (9:1). The solid was filtered and washed with methanol to get pure product (80 mg, 96%). MS (ESI-TOF): [M+H]⁺ calculated for C₅₂H₂₈N₁₂Zn⁺, 885.1929; found, 885.1904

### 6) Tetrakis[methyl α-pyridyl iodonium salt] zinc phthalocyanine Pc4

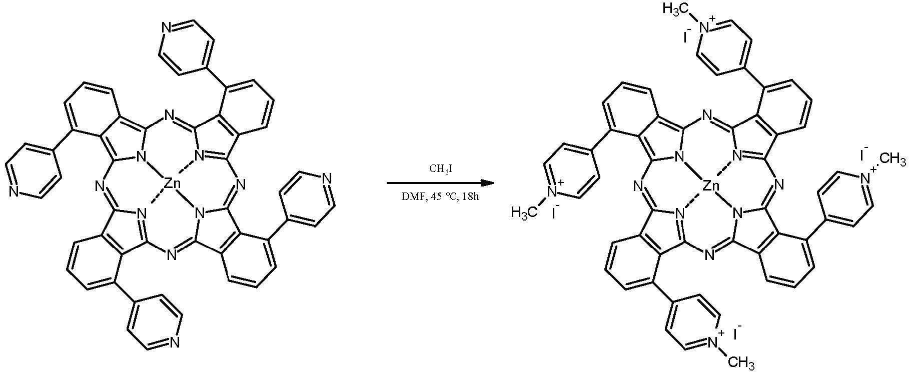

Pyridine phthalocyanine (20 mg, 0.0225 mmol) was dissolved in DMF (3 ml) and methyl iodide (1 ml, 0.0161 mmol) was added into it. The reaction mixture was stirred at 45°C for 18h. The reaction mixture was cooled in an ice bath and product was precipitated by adding diethyl ether (15 ml) into it. The solid filtered was washed several times with diethyl ether and later with mixture of acetone/H₂O (1:1) to get pure product (15 mg, 45.71%). MS (ESI-TOF): [M+I]³⁺ calculated for C₅₆H₄₀IN₁₂Zn³⁺, 357.0612; found, 357.0623

### 7) Synthesis of pyridine substituted phthalocyanine zinc complex

A method for obtaining higher pthalocyanine yields was carried out as follows.

Compounds 2,3-dicyanophenyl trifluoromethanesulfonate and 4-(5,5-dimethyl-1,3,2-dioxaborinan-2-yl)pyridine were synthesized according to procedure disclosed in Ranta et al., J. Org. Chem., 2010, 75, 5178-5194. Pyridine boronate ester (0.726 g, 3.78 mmol), triflate phthalonitrile (1.0 g, 3.78 mmol), PdCl₂(dppf)·DCM (0.092 g, 0.1134 mmol) and K₃PO₄ (2.4 g, 11.31 mmol) were dissolved in a 1:1 mixture of water and toluene (40 ml). The reaction mixture was stirred at room temperature and saturated by bubbling with argon for 15 minutes. After saturation, the mixture was heated with vigorous stirring at 90°C for 2 h under argon. The reaction mixture was cooled to room temperature, extracted with CHCl₃, washed with brine, and dried over anhydrous Na₂SO₄. The solvent was evaporated under reduced pressure to yield a crude product. Re-precipitating the crude product from a 9:1 mixture of CHCl₃/hexane yielded 0.603 g of brown solid as pure product, yield 77%. The analytical data (NMR, MS, etc.) were identical to previously reported values. Further synthesis of phthalocyanine 2 and its cationic form 3 was performed as reported in George et al., Dyes Pigm., 2017, 147, 334-342.

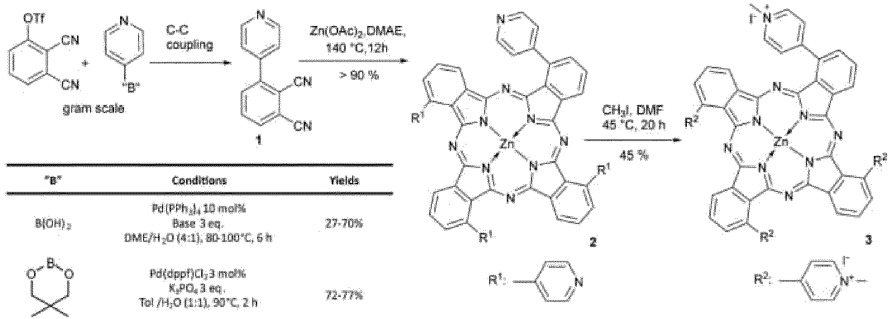

### Example 2. Antimicrobial tests

### Screening test

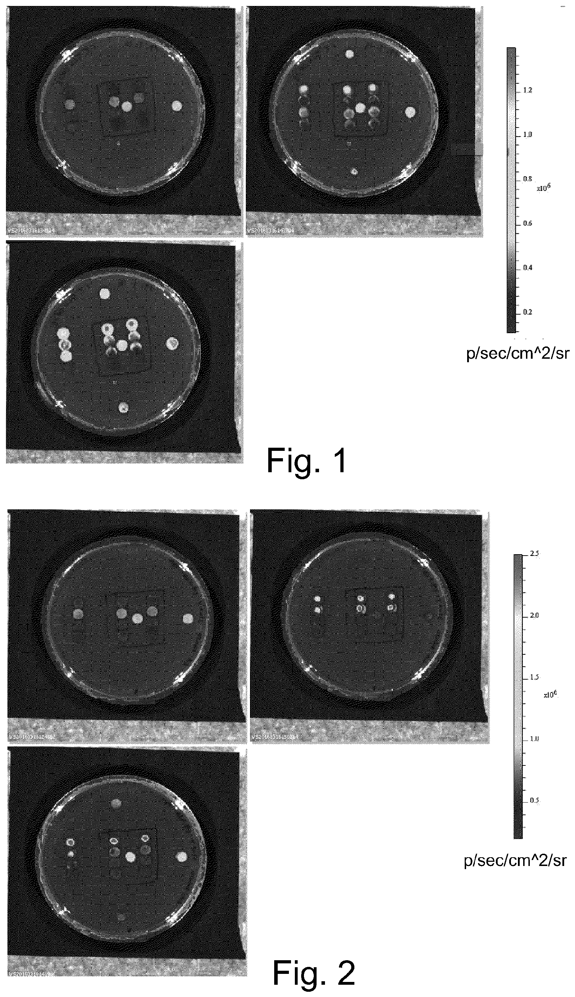

The efficiency of dyes (Pc1, Pc2, Pc3, Pc4) was screened by conducting antimicrobial test with bioluminescent bacterial strains *Escherichia coli* (XL1-Blue, Stratagene, USA) and *Acinetobacter baylyi ADP1* (DSM 24193) carrying plasmid pBAV1C-T5-lux (the plasmid is chloramphenicol resistance derivate of the pBAV1K-T5-lux plasmid (Addgene #55800). The filter papers (12.25 cm²) were soaked in respective dye solution (0.9 mg dye in 200 µl solvent) and allowed to dry on it. After drying, three circular discs (0.5 cm diameter) were cut from each filter paper and pasted on the LA agar (15 g/l agar, 10 g/l tryptone, 5 g/l yeast extract, 5 g/l NaCl) gel plate in such a way that each row corresponds to each dye. A circular dark screen of 0.3 cm height with a square hole in the center was placed over the agar plate. The square hole was cut in such a way that, one column which includes all the four dyes will be under the dark area of the screen while the two remaining columns will be inside the square hole. Two filters [KG3 band pass filter (315-750 nm transmittance) and >KC-17 yellow filter (transmittance > 485 nm)] were placed over the square hole to remove the infrared and UV radiation. The whole setup was placed inside solar simulator (Luzchem, Canada) and the intensity of the illumination was adjusted to 18 mWcm⁻². Control sample to check the effect of dyes were prepared by cutting un-dyed filter paper of same size and placing under dark and illuminated areas of LA agar plate. Luminescence arising from the setup was recorded (Xenogen IVIS 100) before the microbial deposition on the filter paper discs. Microbial solution (5 µl) were pipetted over these filter paper discs and control sample to determine the influence of the filter paper on the growth of microbes were established by pipetting microbial solution on the dark region of the agar plate. Luminescence of the agar plate before and after illumination of 1 hour was measured and the efficient dye which produces less luminescence was screened out from the set. Figure 1 shows the screening results with *E*. *coli* βBAV1C-T5-lux, and Figure 2 shows the screening results with *Acinetobacter baylyi* ADP1 carrying plasmid pBAV1C-T5-lux.

### Colony forming Unit (CFU) method

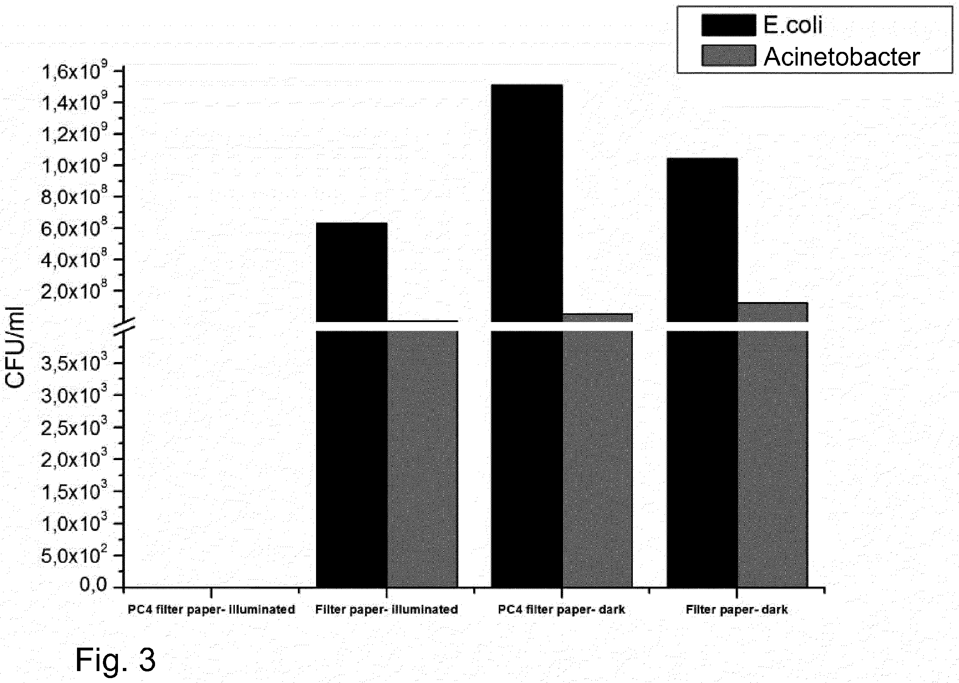

The antimicrobial efficiency of the dye was confirmed by CFU method using microbes *E*. *coli* MG1655 (*E*. *coli* Genetic Resources at Yale) and *A. baylyi* ADP1 (ATCC 33305). Filter paper discs (original and duplicate) of the most efficient dye (Pc4) and un-dyed (dye control) filter paper were placed in the wells of microplate and microbial solution (25 µl) was pipetted over it. The microplate was illuminated in the solar simulator for 1 hour. UV -IR radiations were cut off using a combination of KG3 band pass filter (315-750 nm transmittance) and >Kc-17 yellow filter (transmittance > 485 nm). Similarly, light control samples were prepared by depositing microbial medium over dyed and un-dyed samples by covering microplate with aluminum foil for 1h at room temperature. After 1h of illumination or incubation, the microbes were extracted with LB medium (10 g/l tryptone, 5 g/l yeast extract, 5 g/l NaCl) (975 µl) and serial dilutions were made from each extract. The dilutions were then plated on LA agar plates and incubated at 30°C overnight. The number of colonies grown on the agar plate was counted and CFUs per milliliter were calculated from it. No microbial growth (for E. *coli* and *A. baylyi)* were observed on the plates prepared from illuminated filter papers, while a growth of 10⁹ and 10⁸ CFU/ml for *E .coli* and *A. baylyi* respectively were observed on the plates prepared from control filter papers. This experiment clearly demonstrates the antimicrobial action of the filter paper treated with the dye Pc4 under light illumination, as summarized in Figure 3.

### Example 3. Antimicrobial activity under weak indoor light.

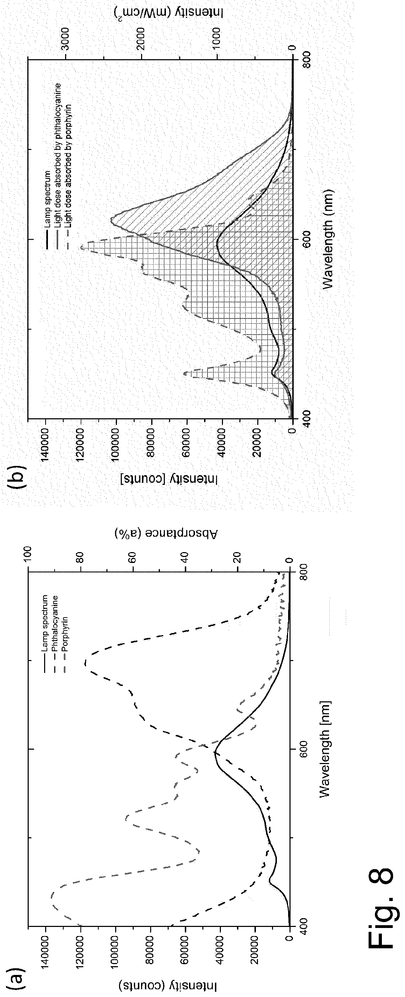

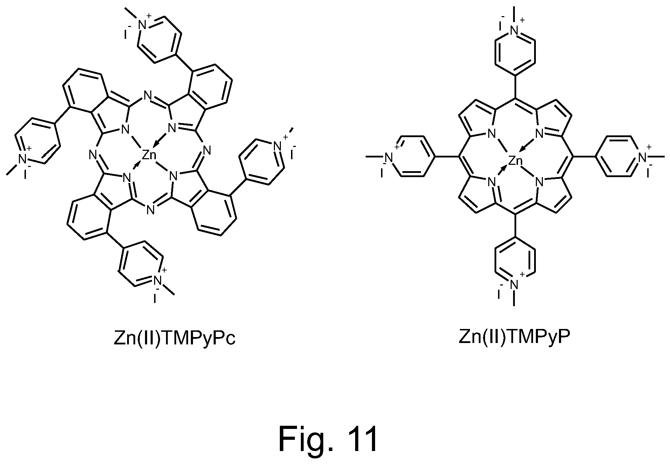

It is demonstrated herein that dye Pc4 can be successfully activated by consumer-grade LED lamp (OSRAM LED Star PAR16 80 36° GU10, power consumption 6.9 W). The spectrum of light emitted from the lamp prior to the experiments was measured. The wavelength of lamp emission was found to be maximum at 594 nm (Figure 8). In addition, the power density of the lamp was also measured at different distances. Intensities were found to be 4 mW/cm² at a distance 28 cm, 8 mW/cm² at 20 cm, 15 mW/cm² at 14 cm and 35 mW/cm² at distance 9 cm away from the detector. For comparison of activity one of the best known PACT photosensitizers, Zn(II)tetrakis[metylpyridinium iodide]porphyrin ZnPf (Zn(II)TMPyP) was used as a reference (structures presented in figure 11). Both Pc4 and ZnPf were deposited onto filter papers as described above. The absorptance of phthalocyanine Pc4 and porphyrin ZnPf papers were calculated from reflectance and transmittance measurement of dyed papers using integrating sphere (IS) detector. The absorptance profiles were very similar to the absorbance measurement in solution. Wavelength corresponding to the maximum absorption is 430 nm and 696 nm respectively for porphyrin and phthalocyanine. However, since two dyes absorb at two different wavelength, the light dose for each dye is different (Figure 8b). The light dose for porphyrin is 1.2 times (5.2 J/cm²) higher than that of phthalocyanine (4.4 J/cm²) under same conditions using LED light. The antimicrobial inactivation experiments with illumination from LED lamp were conducted on E. *coli* and *A. baylyi* as described before. Both Pc4 and ZnPf demonstrated complete inactivation of microorganisms after 1 h illumination.

### Example 4. Leaching tests

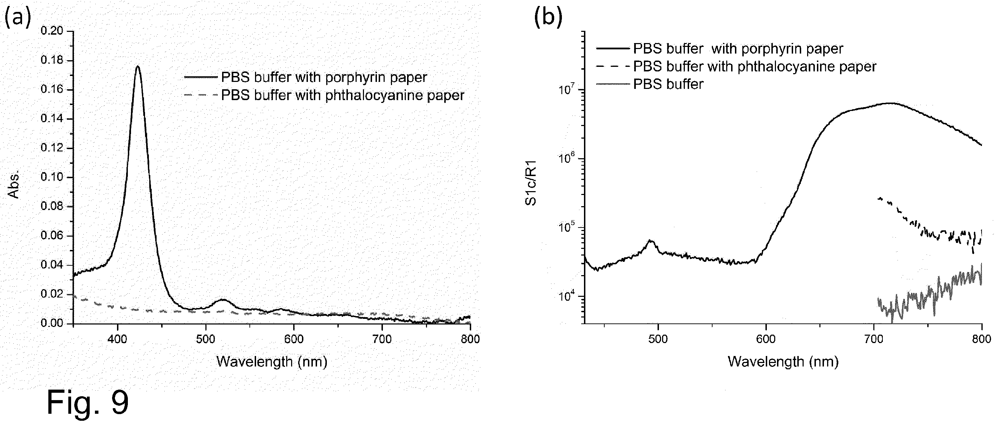

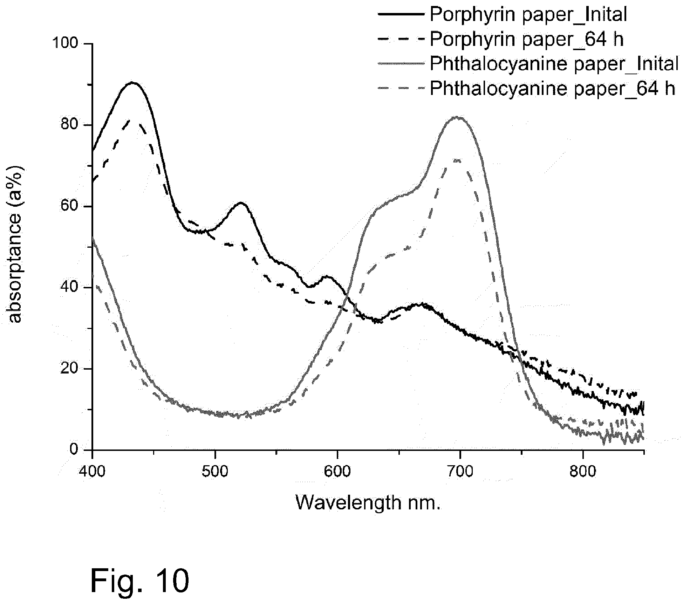

Stability of the dye Pc4 against leaching was tested with PBS buffer pH 7.2. The absorbance and emission of PBS buffer incubated with dye papers were measured for checking the leaching (Figure 9a and b). 28 mg of each dyed paper was soaked in 4 ml PBS buffer in a glass vial for 1 hour at room temperature. Absorbance and emission of PBS buffer from each vial was measured after 1 h to check the leaching of dyes from papers. The PBS solution with ZnPf showed a strong absorption peak at 422 nm which confirmed the leaching of porphyrin into the solution. The emission measurement of PBS solution with porphyrin paper excited at 422 nm displayed an intense emission peak from 600 nm after 1 hour of incubation. However, the PBS extract of Pc4 paper did not show any peak corresponding to the dye after 20 h of incubation at room temperature. Upon excitation at 694 nm it however produced a very faint emission peak of negligible intensity. This shows that the dye Pc4 has exceptionally high stability against leaching, even though it is not chemically bound to cellulose support. Figure 10 shows absorptances (a%) of porphyrin dyed paper and Pc4 dyed paper against wavelength initially and after 64 hours of constant illumination at 35 mW/cm².

However, it was found out that when products having long life span were prepared, such as textiles and/or other further processed products, the simple laboratory tests cannot provide reliable impression about the needs faced by the products. Further immobilisation and controlling of the properties of the products are needed.

## Claims

1. A method for preparing a photoactive product comprising a fibrous substrate, the method comprising
- providing fibrous substrate,
- providing a phthalocyanine of Formula I: 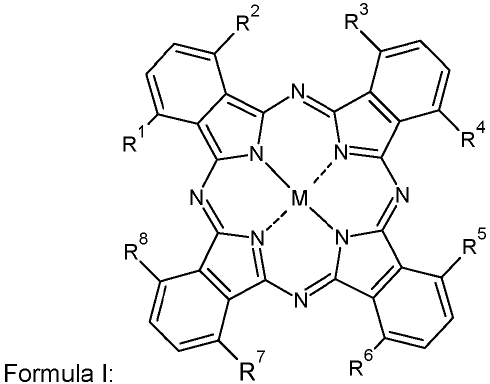
wherein M is a metal ion or two hydrogen atoms,
and wherein the substituent pairs R¹ and R², R³ and R⁴, R⁵ and R⁶, and R⁷ and R⁸, are
- a hydrogen, and
- the other substituent is the same in all the substituent pairs and is selected from 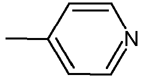 or 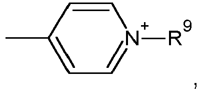
wherein R⁹ is a C1-C18 alkyl,
- providing one or more substances facilitating formation of the photoactive product, and
- immobilising the phthalocyanine of Formula I to the fibrous substrate, preferably by impregnating and/or by coating.

2. The method of claim 1, wherein the substances facilitating formation of the photoactive product comprise one or more immobilisation agents, such as one or more of binders, crosslinking agents and/or entrapment agents, for immobilising the phthalocyanine of Formula I to the fibrous substrate.

3. The method of claim 1 or 2, wherein the substances facilitating formation of the photoactive product comprise one or more immobilisation agents, such as selected from binders and crosslinking agents, for covalently and/or permanently binding the phthalocyanine of Formula I to the fibrous substrate.

4. The method of any of preceding claims, wherein the substances facilitating formation of the photoactive product comprise one or more immobilisation agents selected from polycarboxylic acid, phosphorylating agents, oxidizing agents, such as TEMPO or periodate, organosilylating agents, cyanuric chloride, Cu(I)-catalyzed Huisgen 1,3-dipolar cycloaddition reagent, acylating agents to acylate hydroxyl groups, 1,3,5-triazine linker, phthalic anhydride and/or maleic anhydride.

5. The method of any of preceding claims, wherein the substances facilitating formation of the photoactive product comprise one or more of an additional organic polymer substrate, a hindered amine light stabiliser (HALS), a UV absorber and a hydrophobic top coating.

6. A photoactive product comprising a fibrous substrate, the product comprising a phthalocyanine of Formula I, such as wherein the product is coated or impregnated with the phthalocyanine of Formula I: 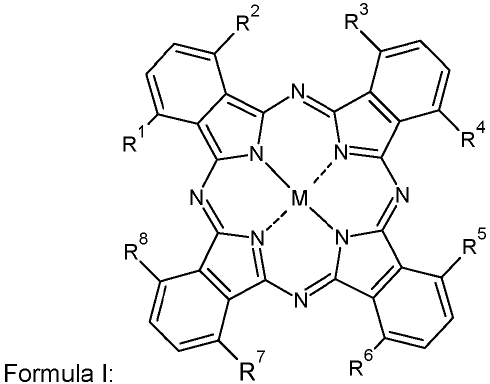
wherein M is a metal ion or two hydrogen atoms,
and wherein the substituent pairs R¹ and R², R³ and R⁴, R⁵ and R⁶, and R⁷ and R⁸, are
- a hydrogen, and
- the other substituent is the same in all the substituent pairs and is selected from 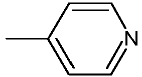 or 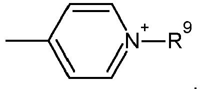
wherein R⁹ is a C1-C18 alkyl, the product comprising one or more substances facilitating formation of the photoactive product or wherein the product is obtained by using one or more substances facilitating formation of the photoactive product, such as with the method of any of claims 1-5.

7. The method of any of claims 1-5 or the photoactive product of claim 6, wherein the phthalocyanine of Formula I is selected from the following:
- the tetrakis[α-pyridyl] phthalocyanine of Formula II: 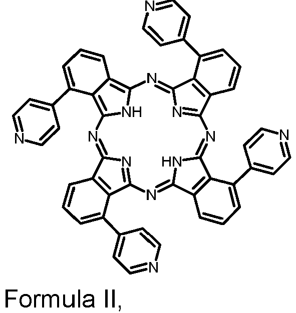
- the tetrakis[α-pyridyl] zinc phthalocyanine of Formula III: 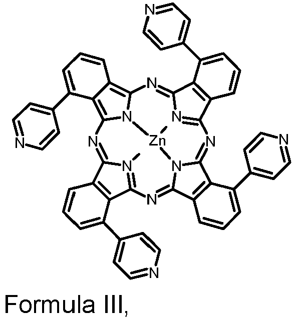
- the tetrakis[methyl α-pyridyl iodonium salt] phthalocyanine of Formula IV: 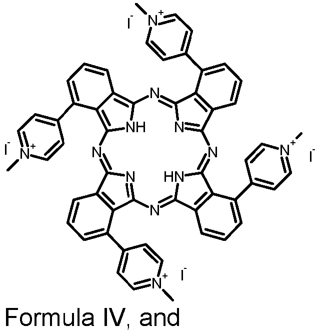
- the tetrakis[methyl α-pyridyl iodonium salt] zinc phthalocyanine of Formula V:

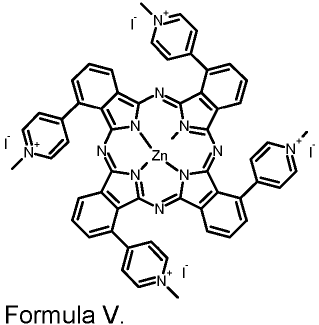

8. The method of any of claims 1-5 or 7, or the photoactive product of any of claims 6-7, wherein the one or more substances facilitating formation of the photoactive product comprise one or more binders and/or non-covalent crosslinking agents attaching the phthalocyanine of Formula I to the fibrous substrate, such as non-covalently binding the phthalocyanine of Formula I to the fibrous substrate.

9. The method of any of claims 1-5 or 7-8, or the photoactive product of any of claims 6-8, wherein the phthalocyanine of Formula I is covalently bound to the fibrous substrate, optionally comprising a spacer between the substrate and the phthalocyanine.

10. The method of any of claims 1-5 or 7-9, or the photoactive product of any of claims 6-9, wherein the one or more substances facilitating formation of the photoactive product comprise one or more of an additional organic polymer substrate, a hindered amine light stabiliser (HALS), a UV absorber, a hydrophobic top coating, and a thickening agent and/or a rheology modifier.

11. The method of any of claims 1-5 or 7-10, or the photoactive product of any of claims 6-10, wherein the product comprises packing material, such as food packing material or medical packing material.

12. The method of any of claims 1-5 or 7-11, or the photoactive product of any of claims 6-11, wherein the product comprises paper, cardboard, and/or a textile, such as wherein the product comprises a clothing, a wearable, a medical product, a filter, or a part thereof.

13. The method of any of claims 1-5 or 7-12, or the photoactive product of any of claims 6-12, wherein the product comprises natural fibres, such as cellulosic fibres, for example natural cellulosic fibres and/or modified cellulosic fibres, and/or wherein the cellulosic fibres comprise semi-synthetic fibres derived from cellulose, such as regenerated and/or spun fibres, and/or wherein the product comprises synthetic fibres, such as polyester fibres, acrylic fibres, nylon fibres, polypropylene fibres and/or polyvinyl fibres.

14. A method for inactivating micro-organisms, the method comprising
- providing the photoactive product of any of claims 6-13, and
- irradiating the phthalocyanine or the object with light to obtain reactive oxygen species
- to inactivate the micro-organisms by oxidative action.

15. Use of phthalocyanine of Formula I: 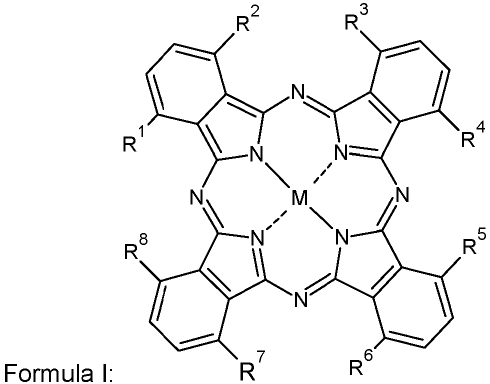
wherein M is a metal ion or two hydrogen atoms,
and wherein the substituent pairs R¹ and R², R³ and R⁴, R⁵ and R⁶, and R⁷ and R⁸, are
- a hydrogen, and
- the other substituent is the same in all the substituent pairs and is selected from 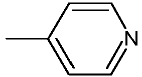 or 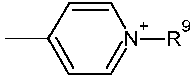
wherein R⁹ is a C1-C18 alkyl,
for preparing the photoactive product of any of claims 6-13, preferably with the method of any of claims 1-5 or 7-13.
